# EUROPEAN PATENT APPLICATION

(11) **EP 4 841 375 A1**
(43) Date of publication of application: **18.11.2026**
(21) Application number: 26171652.6
(22) Date of filing: 10.04.2026
(51) Int. Cl.: G05B 19/418, G05B 19/4097, G06T 7/00

(54) **SYSTEM, METHOD, AND PROGRAM THAT SUPPORT SETTING OF WORKPIECE INSPECTION ENVIRONMENT**

(30) Priority: 12.05.2025 JP 2025079962
(71) Applicant: OMRON Corporation, Kyoto-shi, Kyoto 600-8530 (JP)
(72) Inventor: IWAMURA, Shintaro, Kyoto-shi, 600-8530 (JP); YOSHIDA, Hiroshi, Kyoto-shi, 600-8530 (JP)
(74) Representative: Mewburn Ellis LLP

(57) **Abstract**

A processor (101) of a system (1) generates a plurality of flaw models (20) different in size from each other, based on model data corresponding to a specific type and assigns attribute information indicating acceptability to each of the plurality of flaw models (20) based on a criterion. The processor (101) generates a virtual workpiece (40) by adding the plurality of flaw models (20) to a surface profile model (30) of a workpiece and generates a virtual image (50) by image capture of the virtual workpiece (40) in accordance with an image capture condition. The processor (101) assigns annotation information (51) indicating a correct value of acceptability to a portion of the virtual image (50) including each of the plurality of flaw models (20), based on the attribute information (22). The processor (101) outputs a result of verification between a result of image inspection for the virtual image (50) and the annotation information (51). The system (1) can thus support setting of an inspection environment suitable for inspection of the workpiece.

## Description

### CROSS REFERENCE TO RELATED APPLICATIONS

This nonprovisional application is based on Japanese Patent Application No. 2025-079962 filed with the Japan Patent Office on May 12, 2025, the entire contents of which are hereby incorporated by reference.

### BACKGROUND OF THE INVENTION

### Field of the Invention

The present disclosure relates to a system, a method, and a program that support setting of a workpiece inspection environment.

### Description of the Background Art

An appearance of a workpiece has been inspected by using an image in a production line or the like. In order to set a workpiece inspection environment, such operations as selection of a type of a camera, selection of a type of illumination equipment, and selection of arrangement of the camera and the illumination equipment are performed. These operations require many man-hours. For example, operations to set the camera and the illumination equipment in accordance with each of a plurality of candidates for the inspection environment, operations for image capture of a sample of a workpiece, and operations to evaluate an image obtained by image capture are performed. Therefore, a technique to enhance efficiency of these operations has been desired. One of such techniques is a technique to move the camera within a virtual space.

WO2021/070226 discloses a virtual camera control device including "a gaze point determining unit to determine, as a gaze point, any one point of a traveling object or a browsing object that is disposed in a virtual 3D space and is a virtual 3D object and a virtual camera traveling unit to move a virtual camera while keeping a photographing direction of a virtual camera that photographs an inside of the virtual 3D space and is disposed in the virtual 3D space in a direction from the virtual camera toward the gaze point determined by the gaze point determining unit and keeping a distance from the virtual camera to the traveling object at a fixed distance" (see paragraph [0007]).

### SUMMARY OF THE INVENTION

According to the technique disclosed in WO2021/070226, the camera may be moved within the virtual space. With the technique disclosed in WO2021/070226, however, an image of a workpiece captured by using the camera and illumination within the virtual space cannot be evaluated. Therefore, even when a designer of a production line or the like uses the technique disclosed in WO2021/070226, the designer is not able to readily set the inspection environment suitable for inspection of the workpiece.

The present disclosure was made in view of backgrounds as above, and an object thereof is to provide a technique to support setting of an inspection environment suitable for inspection of a workpiece.

According to one aspect of the present disclosure, a system supports setting of a workpiece inspection environment, and the system includes a storage where first model data is stored, the first model data indicating at least one of a shape and a shading setting for each type of a flaw, an input interface that accepts a user input, and a processor. The input interface accepts an input of a flaw generation condition. The flaw generation condition defines a specific type of a flaw that may occur in a workpiece and a criterion of acceptability of the flaw of the specific type. The processor generates one or more flaw models based on the first model data corresponding to the specific type. The processor assigns attribute information indicating acceptability to each of the one or more flaw models based on the criterion. The processor generates a virtual workpiece corresponding to the workpiece by adding the one or more flaw models to a surface profile model generated based on design data of the workpiece. The input interface further accepts an input of an inspection environment condition. The inspection environment condition defines an image capture condition, The processor generates a virtual image by image capture of the virtual workpiece in accordance with the image capture condition. The processor assigns to a portion of the virtual image including each of the one or more flaw models, annotation information indicating a correct value of acceptability based on the attribute information assigned to a corresponding flaw model. The processor performs image inspection processing on the virtual image. The processor outputs a result of verification between a result of inspection in the image inspection processing and the annotation information.

According to this disclosure, the user can readily check, by inputting the inspection environment condition and then checking the verification result, whether or not the inspection environment condition is appropriate. Therefore, the user can readily set the inspection environment suitable for inspection of the workpiece. The system in the present disclosure can thus support setting of the inspection environment suitable for inspection of the workpiece.

In the disclosure described above, in the storage, second model data indicating, for each combination of a value of one or more elements relating to a surface characteristic, at least one of a surface profile and a shading setting of an object is further stored. The input interface further accepts an input of a combination of a specific value of the one or more element. The processor determines at least one of the surface profile and the shading setting of the virtual workpiece based on the second model data corresponding to the combination of the specific value.

According to this disclosure, the virtual workpiece with surface characteristics similar to those of the workpiece is generated. Consequently, a virtual image similar to a real image obtained by image capture of the workpiece is generated.

In the disclosure described above, the one or more flaw models include a plurality of flaw models. The flaw generation condition further defines the number of flaws per unit area and variation in size. The processor generates the plurality of flaw models so as to satisfy the number of flaws per unit area and the variation.

According to this disclosure, the user can generate the virtual workpiece having a plurality of flaw models in desired number and varied in size.

In the disclosure described above, the processor randomly sets an angle of rotation around a normal to a surface of the virtual workpiece for each of the one or more flaw models.

In general, flaws may be formed in random directions in a workpiece. Therefore, according to the disclosure above, a virtual workpiece closer to a real workpiece is generated.

In the disclosure described above, the image inspection processing is designated by the inspection environment condition. According to this disclosure, the user can check change in verification result when the image inspection processing is changed. Consequently, the user can readily set an image inspection program suitable for inspection of the workpiece.

In the disclosure described above, the processor extracts a defect portion from the virtual image by performing the image inspection processing. The result of verification includes the number or a ratio of portions not extracted as the defect portion, in one or more portions in the virtual image to which the annotation information indicating rejection has been assigned. Alternatively, the result of verification includes the number or a ratio of portions extracted as the defect portion, in one or more portions in the virtual image to which the annotation information indicating acceptance has been assigned.

According to this disclosure, the user can readily check whether or not an unacceptable flaw model is correctly extracted as the defect portion or whether or not an acceptable flaw model is erroneously extracted as the defect portion. Consequently, the user can readily determine whether or not the inspection environment is appropriate.

In the disclosure described above, the first model data corresponding to a type of interest indicates a shape of a flaw of the type of interest specified by alignment between a tomographic image obtained by measurement with an X-ray inspection apparatus, of an object where the flaw of the type of interest has been formed and a result of measurement of a profile of an outer surface of the object.

According to this disclosure, the first model data can more precisely represent the shape of the flaw of the type of interest.

According to one aspect of the present disclosure, a method of supporting setting of a workpiece inspection environment includes accepting, by a processor, an input of a flaw generation condition. The flaw generation condition defines a specific type of a flaw that may occur in a workpiece and a criterion of acceptability of the flaw of the specific type. The method further includes reading, by the processor, specific model data corresponding to the specific type from a storage where model data is stored, the model data indicating at least one of a shape and a shading setting for each type of a flaw, and generating, by the processor, one or more flaw models based on the specific model data. The method further includes assigning, by the processor, attribute information indicating acceptability to each of the one or more flaw models based on the criterion. The method further includes generating, by the processor, a virtual workpiece corresponding to the workpiece by adding the one or more flaw models to a surface profile model generated based on design data of the workpiece. The method further includes accepting, by the processor, an input of an inspection environment condition. The inspection environment condition defines an image capture condition. The method further includes generating, by the processor, a virtual image by image capture of the virtual workpiece in accordance with the image capture condition. The method further includes assigning, by the processor to a portion of the virtual image including each of the one or more flaw models, annotation information indicating a correct value of acceptability based on the attribute information assigned to a corresponding flaw model. The method further includes performing, by the processor, image inspection processing on the virtual image. The method further includes outputting, by the processor, a result of verification between a result of inspection in the image inspection processing and the annotation information.

A program according to one aspect of the present disclosure causes a computer to perform the method above. According to these disclosures as well, the method or the program can support setting of an inspection environment suitable for inspection of a workpiece.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a diagram showing an exemplary configuration of a system according to an embodiment.
Fig. 2 is a diagram showing an exemplary hardware configuration of a system 1 shown in Fig. 1.
Fig. 3 is a diagram showing exemplary first model data.
Fig. 4 is a diagram showing exemplary second model data.
Fig. 5 is a flowchart showing an exemplary flow of processing in an apparatus shown in Fig. 2.
Fig. 6 is a diagram showing an exemplary screen encouraging input of values of one or more elements relating to surface characteristics.
Fig. 7 is a diagram showing an exemplary screen encouraging input of a flaw generation condition.
Fig. 8 is a diagram illustrating details of step S6.
Fig. 9 is a diagram showing an exemplary item for setting an inspection environment condition.
Fig. 10 is a diagram showing an exemplary setting screen for setting a position and a posture of a camera and a position, a posture, and an illumination condition of illumination equipment.
Fig. 11 is a diagram showing an exemplary virtual image.
Fig. 12 is a diagram showing another exemplary virtual image.
Fig. 13 is a diagram showing yet another exemplary virtual image.
Fig. 14 is a diagram showing an exemplary virtual image to which annotation information has been assigned.
Fig. 15 is a diagram showing an exemplary screen showing verification results in connection with a plurality of inspection environment conditions.

### DESCRIPTION OF THE PREFERRED EMBODIMENTS

An embodiment of the technical concept according to the present disclosure will be described below with reference to the drawings. In the description below, the same elements have the same reference characters allotted and their labels and functions are also the same. Therefore, detailed description thereof will not be repeated. Each embodiment, each modification, a configuration of each piece of software, a configuration of each piece of hardware, each function, each type of processing, and the like may selectively be combined as appropriate.

### §1 Application

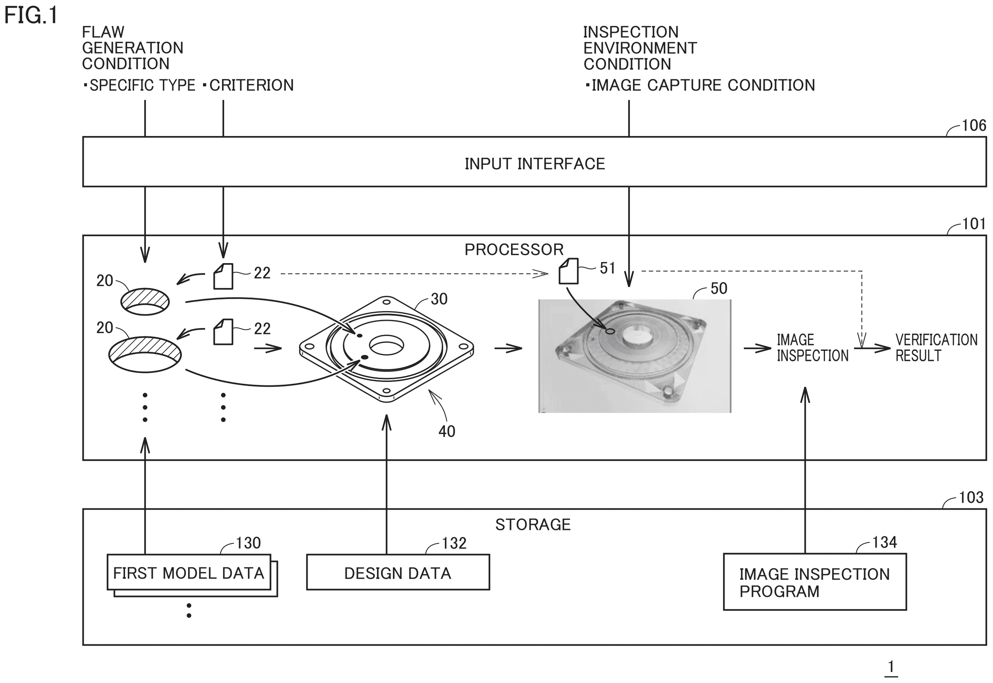

An exemplary scene to which the present disclosure is applied will initially be described with reference to Fig. 1. Fig. 1 is a diagram showing an exemplary configuration of a system according to an embodiment. A system 1 shown in Fig. 1 is set, for example, in a production line where a workpiece is handled. The workpiece includes a final product, an intermediate product, a component, and the like. A surface of the workpiece may include various types of flaws. For example, the type of the flaw includes a scratch, a dent, a chip, a cavity, and the like. Whether or not there is such a flaw and a size thereof are inspected by using an image obtained by image capture of the workpiece. For example, a flaw having a size larger than a reference is detected as a defect from the image. A workpiece including the defect is screened out as a defective product.

An inspection environment includes a type of a camera that captures an image of a workpiece, a type of illumination equipment that illuminates the workpiece with light, arrangement of the camera and the illumination equipment, and the like. Accuracy in inspection is dependent on the inspection environment. Therefore, the inspection environment suitable for the workpiece is desirably set. System 1 then supports setting of a workpiece inspection environment.

As shown in Fig. 1, system 1 includes a processor 101, a storage 103, and an input interface 106.

First model data 130 is stored in storage 103 for each type of flaw. First model data 130 indicates at least one of a shape and a shading (shadow processing) setting of a flaw of a corresponding type. The shading setting represents various properties and algorithms for determining a view such as a color, brightness, and a texture in consideration of interaction between a surface of a 3D object and light and an environment. For example, the shading setting includes setting relating to a texture, reflection mapping, bump mapping, a bidirectional reflectance distribution function (BRDF), procedural shading, a mapping technique, physically based shading, and the like. Reflection mapping is also referred to as environment mapping, and it is a technique for reproducing simulated reflection of a surrounding environment on a surface of a 3D object. Bump mapping is a technique for controlling reflection characteristics using mathematical formulae to simulate irregularities at a smooth surface like a hologram. BRDF is a function to mathematically define how light is reflected with respect to a pair of a direction of incidence of light and a direction of reflection of light. Procedural shading is a technique for generating on-the-fly (procedurally), characteristics such as a color, a pattern, and irregularities of a material by using a mathematical algorithm or a noise function (such as Perlin noise) instead of a textured image. Procedural shading is used for creating an indefinitely detailed texture or controlling a pattern with a parameter.

Workpiece design data 132 is further stored in storage 103. Design data 132 is, for example, three-dimensional computer aided design (CAD) data.

In addition, an image inspection program 134 is stored in storage 103. Image inspection program 134 defines image inspection processing using an image to be inspected (inspection target image). Specifically, image inspection program 134 includes a group of instructions for extracting a portion of the inspection target image where a defect is present (the portion being referred to as a "defect portion" below).

Input interface 106 is connected to an input apparatus and accepts a user input to the input apparatus. Processor 101 performs processing in accordance with the user input accepted by input interface 106.

Specifically, input interface 106 accepts an input of a flaw generation condition. The flaw generation condition defines a specific type of a flaw that may occur in a workpiece and a criterion of acceptability of the flaw of the specific type. The criterion typically relates to a size of the flaw.

Processor 101 reads first model data 130 corresponding to the specific type from storage 103. Processor 101 generates one or more flaw models 20 based on first model data 130. Furthermore, processor 101 assigns attribute information 22 indicating acceptability to each of one or more flaw models 20 based on the criterion. For example, processor 101 assigns attribute information 22 indicating acceptance to flaw model 20 having a size smaller than the criterion. Processor 101 assigns attribute information 22 indicating rejection to flaw model 20 having a size equal to or larger than the criterion.

Furthermore, processor 101 generates a virtual workpiece 40 corresponding to the workpiece by adding one or more flaw models 20 to a surface profile model 30 generated based on workpiece design data 132.

Furthermore, input interface 106 accepts an input of an inspection environment condition. The inspection environment condition defines at least an image capture condition.

Processor 101 generates a virtual image 50 by image capture of virtual workpiece 40 in accordance with the image capture condition. Processor 101 assigns annotation information 51 indicating a correct value ("acceptance" or "rejection") of acceptability to a portion of virtual image 50 including each of one or more flaw models 20, based on attribute information 22 assigned to corresponding flaw model 20.

Processor 101 performs image inspection processing on virtual image 50 in accordance with image inspection program 134. Processor 101 then outputs a result of verification between a result of inspection in the image inspection processing and annotation information 51.

The verification result includes, for example, the number (which is referred to as "the number of misdetections" below) and a ratio (which is referred to as a "misdetection ratio" below) of portions not extracted as the defect portion as a result of the image inspection processing, in one or more portions to which annotation information 51 indicating rejection has been assigned. The verification result may include the number (which is referred to as "the number of over-detections" below) and a ratio (which is referred to as an "over-detection ratio" below) of portions extracted as the defect portion as a result of the image inspection processing, in one or more portions to which annotation information 51 indicating acceptance has been assigned, instead of or in addition to the number of misdetections or the misdetection ratio.

The user can readily check, by inputting the inspection environment condition and then checking the verification result, whether or not the inspection environment condition is appropriate. Therefore, the user can readily set the inspection environment suitable for inspection of the workpiece. System 1 can thus support setting of the inspection environment suitable for inspection of the workpiece.

### §2 Specific Example

### <System Configuration>

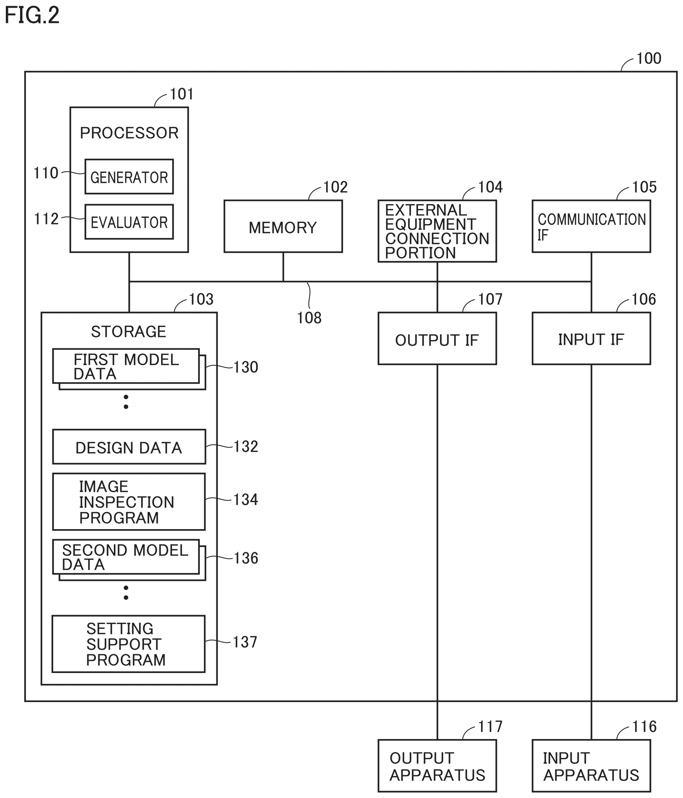

Fig. 2 is a diagram showing an exemplary hardware configuration of system 1 shown in Fig. 1. In an example shown in Fig. 2, system 1 is implemented as a single apparatus 100. As shown in Fig. 2, apparatus 100 includes processor 101, a memory 102, storage 103, an external equipment connection portion 104, a communication interface (IF) 105, input interface 106, an output interface 107, and a bus 108. Components of apparatus 100 are configured to communicate with one another through bus 108.

External equipment connection portion 104 is connectable to any external equipment such as a printer, a scanner, and an external HDD. In one aspect, external equipment connection portion 104 may be implemented by a universal serial bus (USB) terminal or the like.

Communication interface 105 is connected to another piece of equipment over a wired network or a wireless network. In one aspect, communication interface 105 may be implemented by a wired local area network (LAN) port, a wireless fidelity (Wi-Fi^{®}) module, and the like. In another aspect, communication interface 105 may transmit and receive data using a communication protocol such as transmission control protocol/Internet protocol (TCP/IP) or user datagram protocol (UDP). Communication interface 105 may transmit various pictures to another apparatus.

Input interface 106 is connectable to any input apparatus 116 such as a keyboard, a mouse, a touch pad, or a game pad. In one aspect, input interface 106 may be implemented by a USB terminal, a PS/2 terminal, a Bluetooth^{®} module, and the like. In one aspect, input interface 106 may be integrated with input apparatus 116.

Output interface 107 is connectable to any output apparatus 117 such as a cathode ray tube display, a liquid crystal display, or an organic electro-luminescence (EL) display. In one aspect, output interface 107 may be implemented by a USB terminal, a D-sub terminal, a digital visual interface (DVI) terminal, a high-definition multimedia interface (HDMI^{®}) terminal, a display port terminal, and the like. In one aspect, output interface 107 may be integrated with output apparatus 117. Various screens may be shown at output apparatus 117.

Processor 101 may execute a program for performing various functions of apparatus 100. Processor 101 is implemented, for example, by at least one integrated circuit. According to one embodiment, the integrated circuit may include at least one central processing unit (CPU), at least one graphics processing unit (GPU), at least one field programmable gate array (FPGA), at least one application specific integrated circuit (ASIC), at least one artificial intelligence (AI) chip, a combination thereof, or the like.

Memory 102 may be implemented by a dynamic random access memory (DRAM), a static random access memory (SRAM), or the like. A program to be executed by processor 101 and data to be referred to by processor 101 are temporarily stored in memory 102.

Storage 103 is a non-volatile storage device. Storage 103 may be implemented by a hard disk drive (HDD), a solid state drive (SSD), an erasable programmable read only memory (EPROM), an electrically erasable programmable read only memory (EEPROM), a flash memory, or the like. A program to be executed by processor 101 and data to be referred to by processor 101 are stored in storage 103. Processor 101 executes a program read from storage 103 to memory 102 and refers to data read from storage 103 to memory 102.

In addition to first model data 130, design data 132, and image inspection program 134, second model data 136 and a setting support program 137 are stored in storage 103.

Second model data 136 is prepared for each combination of values of one or more elements relating to surface characteristics. Second model data 136 indicates at least one of a surface profile and shading setting corresponding to the combination of the values of one or more elements.

Setting support program 137 includes a group of instructions for supporting setting of the inspection environment. As processor 101 executes setting support program 137, a generator 110 and an evaluator 112 are implemented.

Generator 110 operates in response to acceptance of a flaw generation condition by input interface 106. Specifically, generator 110 generates one or more flaw models 20 based on first model data 130 corresponding to a specific type defined by the flaw generation condition. For example, generator 110 generates a plurality of specific types of flaw models 20 different in size from one another, based on first model data 130 corresponding to the specific types. Furthermore, generator 110 assigns attribute information 22 indicating acceptability to each of one or more flaw models 20 based on a criterion defined by the flaw generation condition. Generator 110 then generates virtual workpiece 40 corresponding to the workpiece by adding one or more flaw models 20 to surface profile model 30 generated based on design data 132.

Furthermore, generator 110 may read second model data 136 corresponding to a combination of specific values of one or more elements relating to surface characteristics from storage 103 in response to acceptance of the specific value by input interface 106. Generator 110 may then determine the surface profile and the shading setting of a portion of virtual workpiece 40 to which flaw model 20 has not been added, based on second model data 136.

Evaluator 112 operates in response to acceptance of input of the inspection environment condition by input interface 106. Specifically, evaluator 112 generates virtual image 50 by image capture of virtual workpiece 40 in accordance with the image capture condition defined by the inspection environment condition. Evaluator 112 assigns to the portion of virtual image 50 including each of one or more flaw models 20, annotation information 51 indicating the correct value of acceptability based on attribute information 22 assigned to corresponding flaw model 20. Evaluator 112 performs the image inspection processing in accordance with image inspection program 134 on virtual image 50 and outputs a result of verification between a result of inspection in the image inspection processing and annotation information 51. The verification result is shown, for example, on output apparatus 117 by means of output interface 107.

### <Model Data>

A material to be used for the workpiece and the type of the flaw that may occur in the workpiece are similar regardless of the type of the workpiece. Therefore, first model data 130 and second model data 136 based on the workpiece composed of a material of interest (typically, metal) that is widely generally used are prepared in advance. First model data 130 and second model data 136 for a workpiece made of metal will be described below.

### (First Model Data)

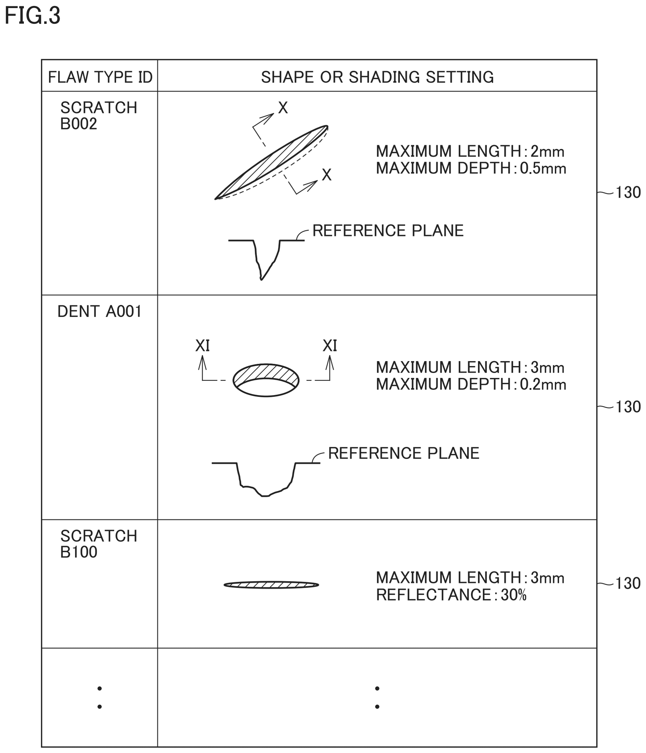

Fig. 3 is a diagram showing exemplary first model data. As shown in Fig. 3, first model data 130 is brought in correspondence with a flaw type ID for identification of the type of the flaw. First model data 130 indicates the shape of the flaw or the shading setting. For example, first model data 130 corresponding to a deep flaw (including, for example, the dent and the cavity) indicates the shape of the flaw. First model data 130 corresponding to a shallow flaw indicates a two-dimensional shape of the flaw and the shading setting. For example, first model data 130 corresponding to a flaw ID "scratch B002" for identification of a deep scratch and a flaw ID "dent A001" for identification of the dent indicates a two-dimensional shape of the flaw, a cross-sectional shape of the flaw, a maximum length of the flaw, and a maximum depth of the flaw. First model data 130 corresponding to a flaw ID "scratch B100" for identification of a shallow scratch indicates a two-dimensional shape of the flaw and a reflectance of the flaw. The two-dimensional shape refers to the shape of the flaw viewed from a direction of normal to the surface where the flaw is formed. The maximum length is a maximum value of the length of the flaw along the surface where the flaw is formed. The cross-sectional shape refers to the shape of the flaw when the workpiece is cut along a surface orthogonal to the surface where the flaw is formed. The maximum depth is a maximum value of the depth of the flaw.

A method of creating first model data 130 is not particularly limited. For example, first model data 130 is created based on a result of measurement of the shape of the flaw of a sample made of a material the same as that for the workpiece. The sample may be the same as or different from the workpiece in shape. In order to precisely measure the shape of the flaw, an X-ray inspection apparatus is preferably used. For example, Japanese Patent Laying-Open No. H9-204532 discloses a technique to determine the contour of an object of interest by processing a tomographic image of the object of interest with an X-ray computed tomography (CT) inspection apparatus. The technique may be used for measurement of the shape of the flaw.

According to the technique disclosed in Japanese Patent Laying-Open No. H9-204532, the contour of the object of interest is determined by alignment between CAD data of the object of interest and a tomographic image. An actual outer surface of the sample, however, may slightly be different from the outer surface represented by the CAD data corresponding to the sample. Therefore, in order to more precisely measure the shape of the flaw, preferably, the X-ray inspection apparatus is used to obtain the tomographic image of the sample and a sensor that measures a distance is used to measure the shape of the outer surface of the sample. For example, by scanning with a sensor mounted on an XY robot, positions of a plurality of points on the outer surface of the sample are determined. Topography of the outer surface is thus measured. By alignment between the tomographic image and the result of measurement of the profile of the outer surface of the sample, the shape of the flaw formed at the outer surface of the sample is precisely measured. First model data 130 corresponding to the type of interest thus indicates the shape of the flaw of the type of interest specified by alignment between the tomographic image obtained by measurement with the X-ray inspection apparatus, of the sample where the flaw of the type of interest is formed and the result of measurement of the profile of the outer surface of the sample. The sensor should only be able to measure a distance, and it is not particularly limited. For example, the sensor that measures the distance includes an optical sensor, a 3D sensor, an ultrasonic sensor, an infrared sensor, an electrical sensor, a magnetic sensor, an acoustic sensor, and the like. The optical sensor includes a laser displacement meter, light detection and ranging (LIDAR), a ToF sensor, a fiber sensor, a white light confocal sensor, an optical interferometric displacement sensor, an optical encoder, and the like.

### (Second Model Data)

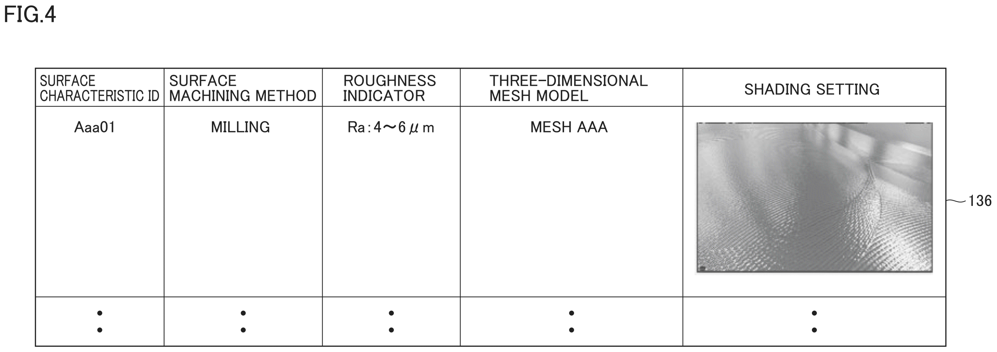

Fig. 4 is a diagram showing exemplary second model data. As shown in Fig. 4, second model data 136 is brought in correspondence with a surface characteristic ID for identification of surface characteristics. The surface characteristic ID is allocated in advance for each combination of the values of one or more elements relating to the surface characteristics. The surface characteristics are mainly dependent on a surface machining method and surface roughness. Therefore, the one or more elements relating to the surface characteristics typically include the surface machining method and a roughness indicator. The surface machining method indicates, for example, milling, grinding, polishing, and the like. The roughness indicator indicates a range of a value of arithmetic mean roughness Ra or surface roughness in maximum height Rz.

Second model data 136 includes a three-dimensional mesh model as information indicating the surface profile. The three-dimensional mesh model indicates the profile of a surface of an object machined with a corresponding surface machining method and having a value of a corresponding roughness indicator. Furthermore, second model data 136 indicates the shading setting corresponding to the surface of the object machined with the corresponding surface machining method and having a value of the corresponding roughness indicator. As shown in Fig. 4, the shading setting indicated by second model data 136 defines an image in accordance with reflection characteristics of the surface of the object. Second model data 136 may indicate both or only one of the three-dimensional mesh model and the shading setting.

### <Flow of Processing>

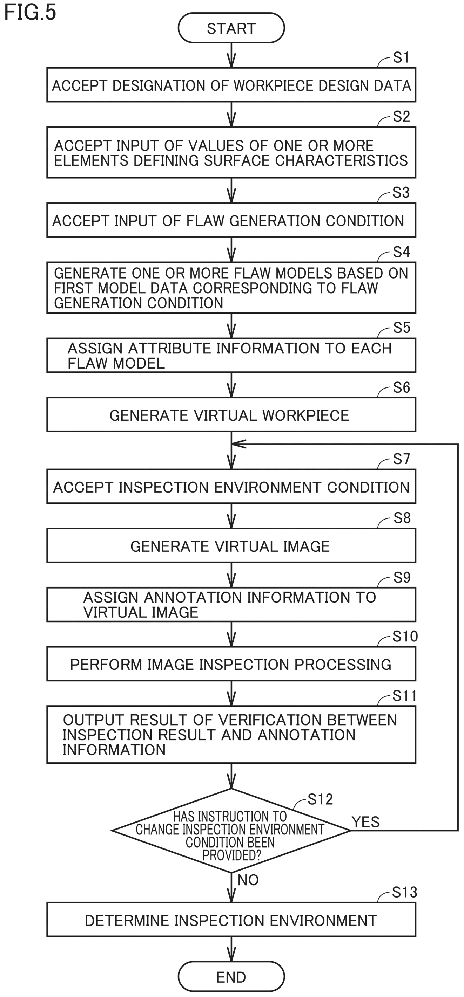

A flow of processing in apparatus 100 will be described with reference to Figs. 5 to 15. Fig. 5 is a flowchart showing an exemplary flow of processing in the apparatus shown in Fig. 2.

Initially in step S1, processor 101 accepts designation of workpiece design data 132. Processor 101 reads designated design data 132 from storage 103.

In next step S2, processor 101 accepts input of specific values of one or more elements that define surface characteristics of the workpiece. Specifically, processor 101 generates a screen encouraging input of the values of the one or more elements and controls output interface 107 such that the screen is shown on output apparatus 117.

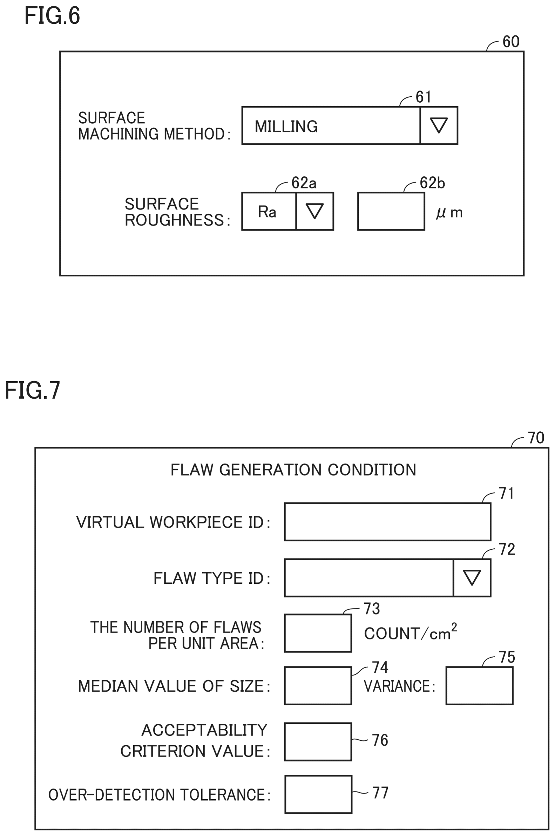

Fig. 6 is a diagram showing an exemplary screen encouraging input of the values of one or more elements relating to surface characteristics. A screen 60 shown in Fig. 6 includes an input field 61 for input of the surface machining method and input fields 62a and 62b for input of a value of the roughness indicator. Input field 62a is used for selection of a type of the surface roughness (arithmetic mean roughness Ra or surface roughness in maximum height Rz). Input field 62b is used for input of the value of surface roughness inputted to input field 62a. Processor 101 accepts the value inputted to screen 60 as specific values of one or more elements that define the surface characteristics of the workpiece.

In next step S3, processor 101 accepts input of the flaw generation condition. Specifically, processor 101 generates a screen encouraging input of the flaw generation condition and controls output interface 107 such that the screen is shown on output apparatus 117.

Fig. 7 is a diagram showing an exemplary screen encouraging input of the flaw generation condition. A screen 70 shown in Fig. 7 includes input fields 71 to 77. Input field 71 is used for setting a virtual workpiece ID for identification of the virtual workpiece. Input field 72 is used for input of a flaw type ID for identification of the type of the flaw formed in the virtual workpiece. The user inputs to input field 72, a specific type of the flaw that may occur in the workpiece.

Input field 73 is used for input of the number of flaws per unit area. Input fields 74 and 75 are used for input of a median value and a value of variance that define variation in size of the flaw, respectively.

Input field 76 is used for input of a criterion of acceptability of the flaw. For example, the criterion indicates an upper limit value of the size of an allowed flaw. Input field 77 is used for input of a tolerance of the size in connection with judgment as to acceptability (which is referred to as an "over-detection tolerance" below). For example, setting of an over-detection tolerance Δd for an upper limit value TH (criterion) of the size of the allowed flaw means allowing judgment of the flaw having a size TH-Δd as the defect. As over-detection tolerance Δd is larger, a frequency (that is, a failure ratio) of judgment of the workpiece having the acceptable flaw as the defective product is higher. Therefore, the user inputs over-detection tolerance Δd in accordance with an expected failure ratio in input field 77.

Processor 101 sets the flaw generation condition in accordance with input in screen 70. The flaw generation condition defines a specific type of the flaw that may occur in the workpiece, the number of flaws per unit area, variation in size of the flaw of the specific type, and the criterion of acceptability and the over-detection tolerance of the specific type of the flaw.

In next step S4, processor 101 reads from storage 103, first model data 130 corresponding to the specific type defined by the flaw generation condition. Processor 101 then generates one or more flaw models 20 based on first model data 130. Specifically, processor 101 generates a plurality of flaw models different in size from each other, based on first model data 130 and the number of flaws per unit area and variation in size of the flaw defined by the flaw generation condition. Processor 101 assigns a unique flaw ID to each of the plurality of flaw models.

Specifically, processor 101 calculates the number N by multiplying an area of the outer surface of the workpiece indicated by design data 132 read in step S1 by the number of flaws per unit area defined by the flaw generation condition. Processor 101 then generates N flaw models 20 having the shape indicated by first model data 130. Furthermore, processor 101 changes the size of each of N flaw models 20 so that the median value and the variance of the size satisfy such variation defined by the flaw generation condition. N flaw models 20 are thus different from one another in size. At this time, processor 101 preferably does not generate flaw model 20 having the size between the criterion and a value smaller by the over-detection tolerance than the criterion, based on the flaw generation condition. This is because judgment of flaw model 20 having such a size as the defect portion is permitted, and hence the flaw model does not serve as the reference for setting the inspection environment.

In next step S5, processor 101 assigns attribute information 22 indicating acceptability to each of one or more flaw models 20, based on the criterion defined by the flaw generation condition. Specifically, processor 101 assigns attribute information 22 indicating rejection to flaw model 20 having the size equal to or larger than the criterion. Processor 101 assigns attribute information 22 indicating acceptance to flaw model 20 having the size smaller than the criterion.

Attribute information 22 may include not only acceptability of flaw model 20 but also a flaw ID for identification of flaw model 20, a flaw type ID, and information indicating the size or the shading setting. The information indicating the size indicates, for example, the maximum length and the maximum depth.

In next step S6, processor 101 generates virtual workpiece 40 corresponding to the workpiece. Processor 101 assigns to generated virtual workpiece 40, a virtual workpiece ID inputted in input field 71 in screen 70 shown in Fig. 7.

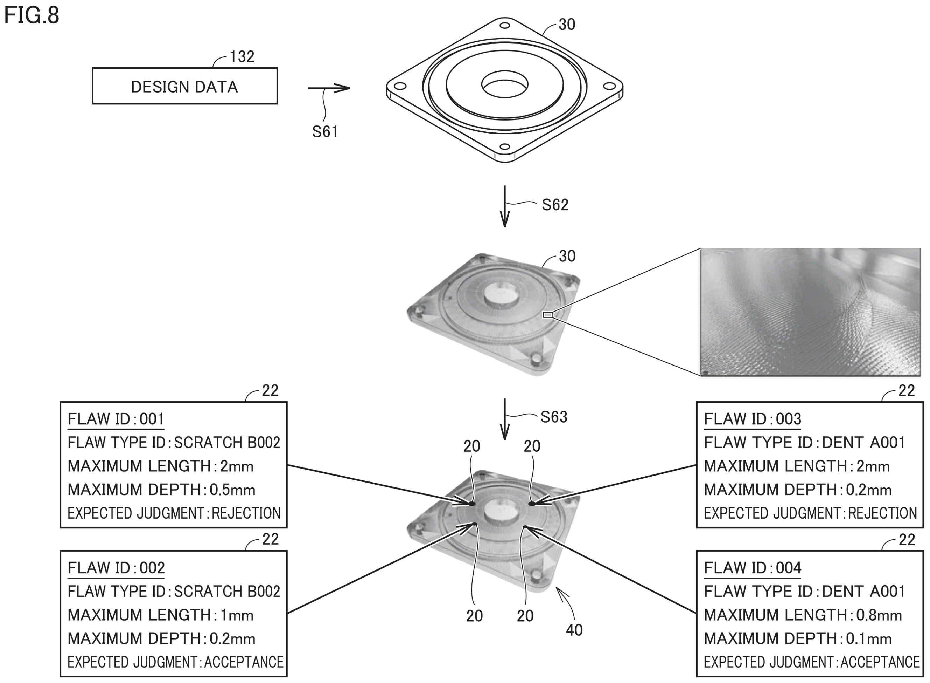

Fig. 8 is a diagram illustrating details of step S6. As shown in Fig. 8, step S6 includes steps S61 to S63.

In step S61, processor 101 generates surface profile model 30 from design data 132 read in step S1. Surface profile model 30 is represented, for example, by a universal scene description (USD) file. Surface profile model 30 is converted from design data 132 by a known tool.

In step S62, processor 101 reads from storage 103, second model data 136 corresponding to a combination of a specific value accepted in step S2. Processor 101 applies the three-dimensional mesh model and the shading setting included in second model data 136 to surface profile model 30. The surface of surface profile model 30 is thus updated, for example, to have a view determined by the shading setting in the first row shown in Fig. 4.

In step S63, processor 101 generates virtual workpiece 40 by evenly arranging in surface profile model 30, flaw models 20 generated in step S4. In an example where surface profile model 30 includes a plurality of surfaces and boundaries therebetween, the vicinity of the boundary tends to be shaded. Therefore, for reliable evaluation of accuracy in inspection of flaw model 20 arranged in a region in the vicinity of the boundary, processor 101 makes determination such that flaw model 20 is arranged in both of the region in the vicinity of the boundary and a region sufficiently distant from the boundary. For example, in an example where M flaw models 20 are arranged at a certain surface, processor 101 divides the surface into M regions in accordance with a distance from the boundary. M regions are equal in area to one another. Processor 101 arranges M flaw models in M regions, respectively.

In general, flaws may be formed in random directions in a workpiece. Therefore, processor 101 preferably randomly sets for each flaw model 20, an angle of rotation around the normal to the surface of virtual workpiece 40. Processor 101 may randomly set the angle of rotation from a designated range. The range may be designated by default or by the user.

Referring back to Fig. 5, in next step S7, processor 101 accepts the inspection environment condition. Specifically, processor 101 generates a screen encouraging input of the inspection environment condition and controls output interface 107 such that the screen is shown on output apparatus 117. The inspection environment condition defines at least the image capture condition.

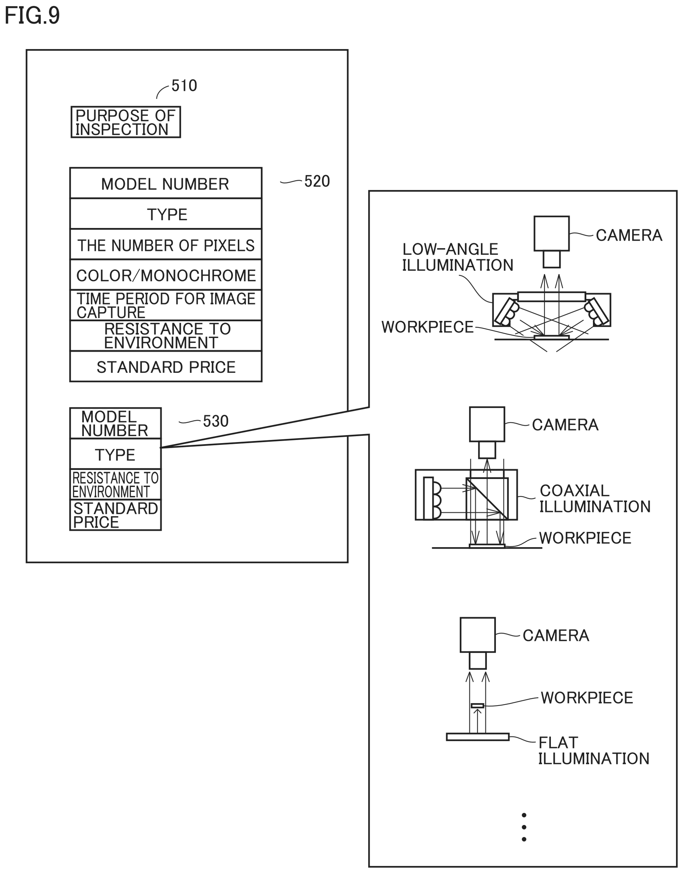

Fig. 9 is a diagram showing an exemplary item for setting the inspection environment condition. As shown in Fig. 9, the inspection environment condition includes a setting item 510 relating to a purpose of inspection, a setting item 520 relating to the camera, and a setting item 530 relating the illumination equipment. Setting item 510 is an item common between the camera and the illumination equipment and includes various applications (details of inspection) by way of example. By way of example, the various applications (details of inspection) may include "inspection for the flaw at an edge of the workpiece or the surface of metal," "inspection of a workpiece having an indefinite shape," "inspection of the shape of the workpiece that desirably does not affect a state of the surface of the workpiece," "inspection of the workpiece high in reflectance," and the like.

Setting item 520 may include a model number, a type, the number of pixels, color/monochrome, a time period for image capture, resistance to environment, price, and the like by way of example. Setting item 520 is at least one of the image capture conditions.

Setting item 530 may include a model number, a type, resistance to environment, a price, and the like by way of example. The type of the illumination equipment includes, for example, low-angle illumination, coaxial illumination, flat illumination, and the like. Setting item 530 is at least one of the image capture conditions.

Furthermore, the inspection environment condition includes a position and a posture of the camera, a position and a posture of the illumination equipment, and an illumination condition of the illumination equipment. These items are some of the image capture conditions.

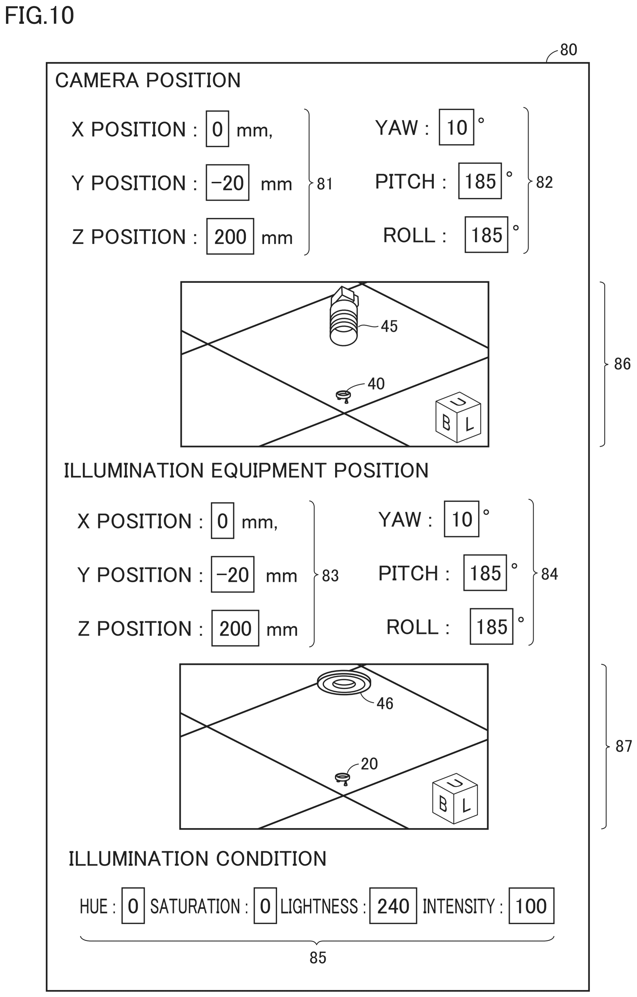

Fig. 10 is a diagram showing an exemplary setting screen for setting the position and the posture of the camera and the position, the posture, and the illumination condition of the illumination equipment. A screen 80 shown in Fig. 10 includes input fields 81 to 85.

Input field 81 is used for input of XYZ coordinates indicating the position of the camera in the coordinate system with the workpiece being defined as the origin. Input field 82 is used for input of an angle of each of yaw, pitch, and roll that define the posture of the camera. Input field 83 is used for input of XYZ coordinates that define the position of the illumination equipment in the coordinate system with the workpiece being defined as the origin. Input field 84 is used for input of an angle of each of yaw, pitch, and roll that define the posture of the illumination equipment. Input field 85 is used for input of a value of each of a hue, a saturation, lightness, and intensity that define illumination conditions of the illumination equipment.

Screen 80 includes preview areas 86 and 87. In preview area 86, virtual workpiece 40 arranged at the origin in the virtual space and a virtual camera 45 arranged in accordance with values inputted in input fields 81 and 82 are shown. In preview area 87, virtual workpiece 40 arranged at the origin in the virtual space and virtual illumination equipment 46 arranged in accordance with values inputted in input fields 83 and 84 are shown.

Referring back to Fig. 5, in next step S8, processor 101 generates virtual image 50 by image capture of the virtual workpiece in accordance with the image capture condition defined by the inspection environment condition accepted in step S7. Specifically, processor 101 has virtual workpiece 40 generated in step S6 arranged at the origin of the virtual space. Processor 101 has the virtual camera and the virtual illumination equipment arranged in accordance with the inspection environment condition, and has the virtual illumination equipment emit virtual illumination light. Processor 101 generates virtual image 50 by having the virtual camera capture the image of the virtual workpiece.

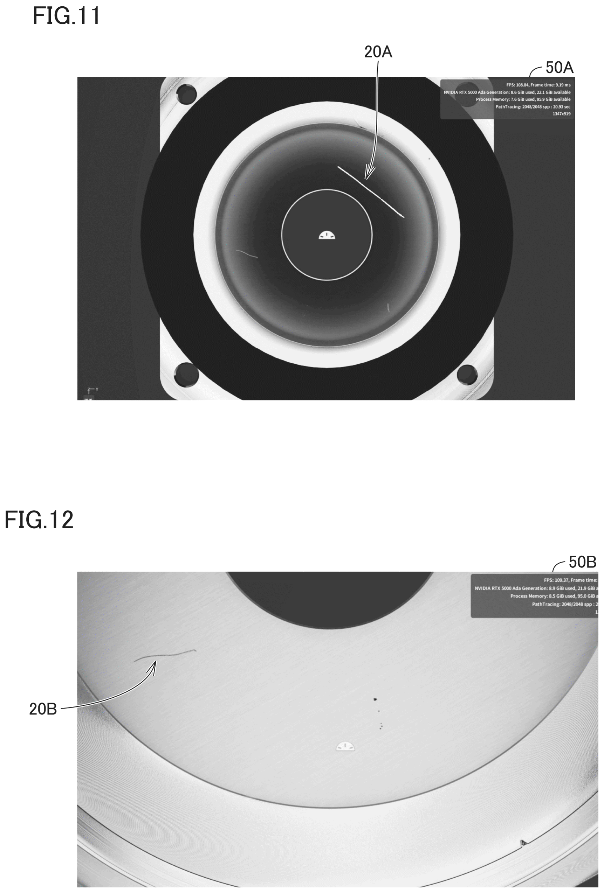

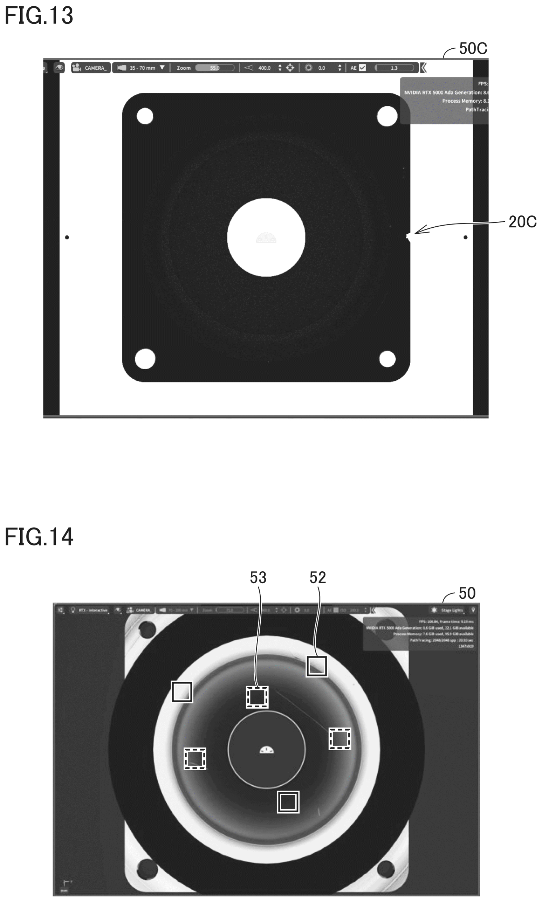

Fig. 11 is a diagram showing an exemplary virtual image. Fig. 12 is a diagram showing another exemplary virtual image. Fig. 13 is a diagram showing yet another exemplary virtual image. A virtual image 50A shown in Fig. 11 is captured when low-angle illumination is set as the illumination equipment. Low-angle illumination is effective for emphasizing a flaw model 20A corresponding to a shallow scratch. A virtual image 50B shown in Fig. 12 is captured when coaxial illumination is set as the illumination equipment. Coaxial illumination is effective for emphasizing a flaw model 20B corresponding to a deep scratch. A virtual image 50C shown in Fig. 13 is captured when flat illumination is set as the illumination equipment. Flat illumination is effective for emphasizing a flaw model 20C corresponding to a chip at an edge. As shown in Figs. 11 to 13, difference in type of the illumination equipment leads to differently generated virtual images.

Referring back to Fig. 5, in next step S9, processor 101 assigns annotation information 51 indicating the correct value of acceptability to a portion of virtual image 50 including each flaw model 20, based on attribute information 22 assigned to flaw model 20. Specifically, processor 101 assigns annotation information 51 indicating acceptance to a portion including flaw model 20 to which attribute information 22 indicating acceptance has been assigned. Processor 101 assigns annotation information 51 indicating rejection to a portion including flaw model 20 to which attribute information 22 indicating rejection has been assigned.

Fig. 14 is a diagram showing an exemplary virtual image to which annotation information has been assigned. In Fig. 14, a frame border 52 indicates a portion to which annotation information 51 indicating rejection has been assigned. In other words, flaw model 20 to which attribute information 22 indicating rejection has been assigned is seen within frame border 52 in virtual image 50. A frame border 53 indicates a portion to which annotation information 51 indicating acceptance has been assigned. In other words, flaw model 20 to which attribute information 22 indicating acceptance has been assigned is seen within frame border 53 in virtual image 50.

Referring back to Fig. 5, in next step S10, processor 101 performs the image inspection processing on virtual image 50. The image inspection processing is defined by image inspection program 134. Therefore, processor 101 performs the image inspection processing in accordance with image inspection program 134. Image inspection program 134 is created in advance by a known technique (the technique disclosed, for example, in Japanese Patent Laying-Open No. 2020-106467). For example, processor 101 performs processing as below.

Processor 101 calculates a feature value representing defectiveness for each pixel or each group of pixels of a prescribed size included in virtual image 50. Processor 101 specifies a pixel or a group of pixels having the feature value exceeding a predetermined threshold value as the defect portion.

In next step S11, processor 101 outputs a result of verification between the result of inspection in the image inspection processing and the annotation information. For example, processor 101 generates a screen showing the verification result and controls output interface 107 such that the screen is shown on output apparatus 117.

In next step S12, processor 101 determines whether or not it has received an instruction to change the inspection environment condition. When processor 101 has not received the instruction to change the inspection environment condition (NO in step S12), processor 101 determines the inspection environment (step S13). When processor 101 has received the instruction to change the inspection environment condition (YES in step S12), it has the process return to step S7. The verification result is thus outputted for each of a plurality of inspection environment conditions. For example, the user adjusts a camera parameter (color/monochrome, the time period for image capture, the number of pixels, or the like) or adjusts an illumination parameter (chromaticity, the saturation, the lightness, the intensity, or the like) in step S7. Alternatively, when there is no room for adjustment of the camera parameter and the illumination parameter, the user adjusts the position and the posture of the camera and the position and the posture of the illumination equipment.

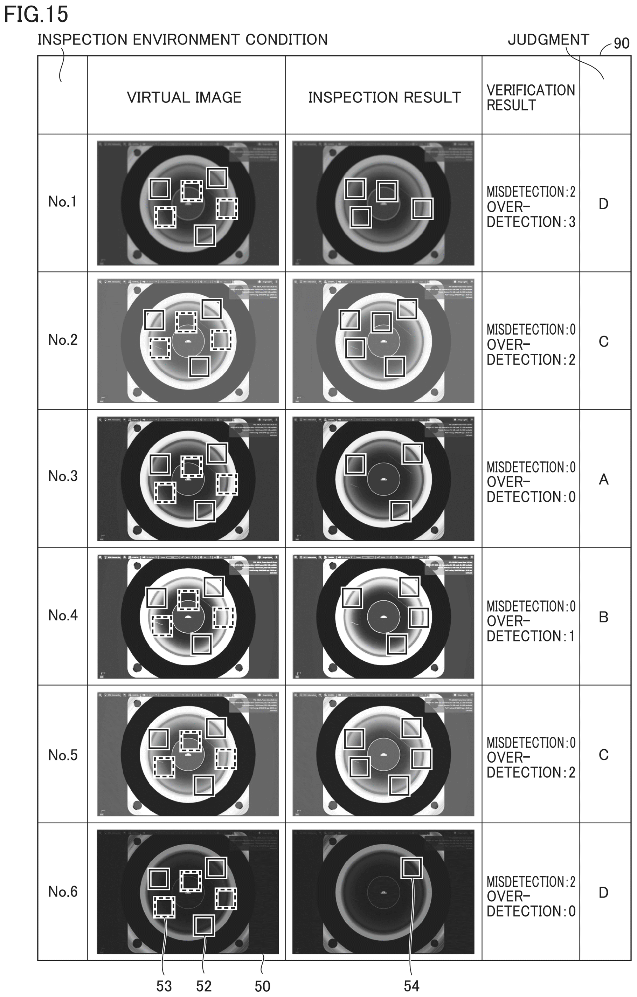

Fig. 15 is a diagram showing an exemplary screen showing verification results in connection with a plurality of inspection environment conditions. A screen 90 shown in Fig. 15 is an exemplary screen shown on output apparatus 117 after steps S7 to S11 are repeated six times. In screen 90, virtual image 50, the inspection result, the verification result, and a judgment rank for each of the six set inspection environment conditions are shown.

As shown in Fig. 15, in virtual image 50, frame borders 52 and 53 surrounding flaw model 20 are shown. Frame border 52 indicates the portion to which annotation information 51 indicating rejection has been assigned. Frame border 53 indicates the portion to which annotation information 51 indicating acceptance has been assigned. The inspection result indicates a defect portion 54 extracted from virtual image 50. The verification result indicates the number of misdetections and the number of over-detections. The verification result may indicate the misdetection ratio and the over-detection ratio instead of the number of misdetections and the number of over-detections.

Processor 101 determines the judgment rank based on the number of misdetections and the number of over-detections. Specifically, when the number of misdetections is one or more, processor 101 determines the judgment rank as "D". When the number of misdetections is 0, processor 101 determines the judgment rank as one of "A" to "C" in accordance with the number of over-detections. For example, processor 101 determines the judgment rank as "A" in accordance with the number of over-detections being smaller than a first threshold value (for example, "1"). Processor 101 determines the judgment rank as "B" in accordance with the number of over-detections being equal to or larger than the first threshold value and being smaller than a second threshold value (for example, "2") larger than the first threshold value. Processor 101 determines the judgment rank as "C" in accordance with the number of over-detections being equal to or larger than the second threshold value.

The user can readily set the inspection environment suitable for the workpiece by checking the screen where the verification result as shown in Fig. 15 is shown. For example, the user has steps S7 to S11 repeatedly performed by successively inputting a plurality of candidates for the inspection environment as the inspection environment condition. The user then sets the candidate corresponding to the judgment rank "A" (the inspection environment condition "No. 3" in the example shown in Fig. 15) as the inspection environment. Alternatively, when the user desires to evaluate the already determined inspection environment, the user may input the inspection environment condition corresponding to the inspection environment in step S7.

### <Modification>

Accuracy in extraction of the defect portion is dependent not only on the image capture condition but also on image inspection program 134. Therefore, a plurality of image inspection programs 134 different in algorithm from one another are preferably stored in storage 103. In this case, the user designates the image inspection processing as the inspection environment condition. Processor 101 performs the image inspection processing designated in the inspection environment condition on virtual image 50. Specifically, processor 101 reads image inspection program 134 corresponding to the designated image inspection processing from storage 103 and executes read image inspection program 134. The user can thus readily set the image inspection program suitable for inspection of the workpiece.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A system (1) that supports setting of a workpiece inspection environment, the system comprising:
a storage (103) where first model data (130) is stored, the first model data (130) indicating at least one of a shape and a shading setting for each type of a flaw;
an input interface (106) that accepts a user input; and
a processor (101), wherein
the input interface (106) accepts an input of a flaw generation condition, the flaw generation condition defining a specific type of a flaw that may occur in a workpiece and a criterion of acceptability of the flaw of the specific type,
the processor (101)
generates one or more flaw models (20) based on the first model data (130) corresponding to the specific type,
assigns attribute information (22) indicating acceptability to each of the one or more flaw models (20) based on the criterion, and
generates a virtual workpiece (40) corresponding to the workpiece by adding the one or more flaw models (20) to a surface profile model (30) generated based on design data (132) of the workpiece,
the input interface (106) further accepts an input of an inspection environment condition, the inspection environment condition defining an image capture condition, and
the processor (101)
generates a virtual image (50) by image capture of the virtual workpiece (40) in accordance with the image capture condition,
assigns annotation information (51) indicating a correct value of acceptability to a portion of the virtual image (50) including each of the one or more flaw models (20), based on the attribute information (22) assigned to a corresponding flaw model,
performs image inspection processing on the virtual image (50), and
outputs a result of verification between a result of inspection in the image inspection processing and the annotation information (51).

2. The system according to claim 1, wherein
in the storage (103), second model data (136) indicating, for each combination of a value of one or more elements relating to a surface characteristic, at least one of a surface profile and a shading setting of an object is further stored,
the input interface (106) further accepts an input of a combination of specific values of the one or more elements, and
the processor (101) determines at least one of the surface profile and the shading setting of the virtual workpiece (40) based on the second model data (136) corresponding to the combination of the specific value.

3. The system according to claim 1 or 2, wherein
the one or more flaw models (20) include a plurality of flaw models,
the flaw generation condition further defines the number of flaws per unit area and variation in size, and
the processor (101) generates the plurality of flaw models so as to satisfy the number of flaws per unit area and the variation.

4. The system according to any one of claims 1 to 3, wherein
the processor (101) randomly sets an angle of rotation around a normal to a surface of the virtual workpiece (40) for each of the one or more flaw models (20).

5. The system according to any one of claims 1 to 4, wherein
the image inspection processing is designated by the inspection environment condition.

6. The system according to any one of claims 1 to 5, wherein
the processor (101) extracts a defect portion from the virtual image (50) by performing the image inspection processing, and
the result of verification includes the number or a ratio of portions not extracted as the defect portion, in one or more portions in the virtual image (50) to which the annotation information (51) indicating rejection has been assigned.

7. The system according to any one of claims 1 to 6, wherein
the processor (101) extracts a defect portion from the virtual image (50) by performing the image inspection processing, and
the result of verification includes the number or a ratio of portions extracted as the defect portion, in one or more portions in the virtual image (50) to which the annotation information (51) indicating acceptance has been assigned.

8. The system according to any one of claims 1 to 7, wherein
the first model data (130) corresponding to a type of interest indicates a shape of a flaw of the type of interest specified by alignment between a tomographic image obtained by measurement with an X-ray inspection apparatus, of an object where the flaw of the type of interest has been formed and a result of measurement of a profile of an outer surface of the object.

9. A method of supporting setting of a workpiece inspection environment, comprising:
accepting, by a processor (101), an input of a flaw generation condition, the flaw generation condition defining a specific type of a flaw that may occur in a workpiece and a criterion of acceptability of the flaw of the specific type;
reading, by the processor (101), specific model data corresponding to the specific type from a storage (103) where model data (130) is stored, the model data (130) indicating at least one of a shape and a shading setting for each type of a flaw, and generating, by the processor (101), one or more flaw models (20) based on the specific model data;
assigning, by the processor (101), attribute information (22) indicating acceptability to each of the one or more flaw models (20) based on the criterion;
generating, by the processor (101), a virtual workpiece (40) corresponding to the workpiece by adding the one or more flaw models (20) to a surface profile model (30) generated based on design data (132) of the workpiece;
accepting, by the processor (101), an input of an inspection environment condition, the inspection environment condition defining an image capture condition;
generating, by the processor (101), a virtual image (50) by image capture of the virtual workpiece (40) in accordance with the image capture condition;
assigning, by the processor (101), annotation information (51) indicating a correct value of acceptability to a portion of the virtual image (50) including each of the one or more flaw models (20), based on the attribute information (22) assigned to a corresponding flaw model;
performing, by the processor (101), image inspection processing on the virtual image (50); and
outputting, by the processor (101), a result of verification between a result of inspection in the image inspection processing and the annotation information (51).

10. A program (137) for causing a computer (100) to perform a method of supporting setting of a workpiece inspection environment, the method comprising:
accepting an input of a flaw generation condition, the flaw generation condition defining a specific type of a flaw that may occur in a workpiece and a criterion of acceptability of the flaw of the specific type;
reading specific model data corresponding to the specific type from a storage (103) where model data (130) is stored, the model data (130) indicating at least one of a shape and a shading setting for each type of a flaw, and generating one or more flaw models (20) based on the specific model data;
assigning attribute information (22) indicating acceptability to each of the one or more flaw models (20) based on the criterion;
generating a virtual workpiece (40) corresponding to the workpiece by adding the one or more flaw models (20) to a surface profile model (30) generated based on design data (132) of the workpiece;
accepting an input of an inspection environment condition, the inspection environment condition defining an image capture condition;
generating a virtual image (50) by image capture of the virtual workpiece (40) in accordance with the image capture condition;
assigning annotation information (51) indicating a correct value of acceptability to a portion of the virtual image (50) including each of the one or more flaw models (20), based on the attribute information (22) assigned to a corresponding flaw model;
performing image inspection processing on the virtual image (50); and
outputting a result of verification between a result of inspection in the image inspection processing and the annotation information (51).
